# FASCICULE DE BREVET EUROPEEN

(11) **EP 4 163 476 B1**
(45) Date de publication et mention de la délivrance du brevet: **20.08.2025**
(21) Numéro de dépôt: 22199728.1
(22) Date de dépôt: 05.10.2022
(51) Int. Cl.: F01D 21/00, B64D 29/00, F02C 7/25, B64D 29/02, B64D 45/00

(54) **ASSEMBLAGE COMPORTANT DEUX TRONÇONS TUBULAIRES CONCENTRIQUES ET UN ENSEMBLE DE CAPTEURS DE FLUX THERMIQUE DISPOSÉS À L'INTÉRIEUR DU TRONÇON TUBULAIRE EXTÉRIEUR**
ANORDNUNG MIT ZWEI KONZENTRISCHEN ROHRABSCHNITTEN UND EINER ANORDNUNG VON IN EINEM ÄUSSEREN ROHRABSCHNITT ANGEORDNETEN WÄRMEFLUSSSENSOREN
ASSEMBLY COMPRISING TWO CONCENTRIC TUBULAR SECTIONS AND A SET OF HEAT FLUX SENSORS ARRANGED INSIDE THE OUTER TUBULAR SECTION

(30) Priorité: 06.10.2021 FR 2110593
(43) Date de publication de la demande: 12.04.2023
(73) Titulaire: AIRBUS OPERATIONS, 31060 Toulouse Cedex 9 (FR)
(72) Inventeur: FLEMIN, Christian, 31060 TOULOUSE (FR)
(74) Mandataire: Cabinet Le Guen Maillet

(56) Documents cités:
- WO-A2-2008/091289
- US-A1- 2015 362 408
- US-A1- 2017 096 238

## Description

### DOMAINE TECHNIQUE

La présente invention concerne un assemblage qui comporte deux tronçons tubulaires concentriques et une enveloppe d'un fluide et un ensemble de capteurs de flux thermique qui sont répartis à l'intérieur du tronçon tubulaire extérieur, ainsi qu'un aéronef comportant au moins un tel assemblage.

### ÉTAT DE LA TECHNIQUE ANTÉRIEURE

Un aéronef comporte classiquement au moins un turboréacteur qui comporte un moteur formant un noyau autour duquel sont agencés une structure interne fixe (également appelée IFS « Internal Fixed Structure » en Anglo-saxon) entourant le moteur, et des capots extérieurs disposés autour de la structure interne fixe.

La structure interne fixe prend globalement la forme d'un cylindre de révolution à l'intérieur duquel circule un fluide, par exemple sous forme gazeuse et/ou liquide, et elle est généralement divisée en deux demi-cylindres montés sur un mât de l'aéronef.

La structure interne fixe sert entre autres de barrières thermiques avec les autres éléments du turboréacteur disposés à l'extérieur de la structure interne fixe.

Pour détecter le départ d'un incendie ou un échauffement anormal à l'intérieur de la structure interne fixe, il est connu d'utiliser des capteurs de détection de surchauffe ou d'incendie (« fire loops » en Anglo-saxon) qui sont répartis à différents endroits du turboréacteur.

Pour détecter une surpression lors d'une inspection au sol et éventuellement un éclatement au niveau d'une partie de la structure interne fixe, il est connu d'utiliser des capteurs spécifiques qui sont connus sous les appellations anglosaxonnes « Pressure Relief Door » et « Burst Duct Detection Device » et qui sont relativement lourds et encombrants et n'assurent pas toujours une surveillance en continu.

Même si ces éléments donnent de bons résultats, il est nécessaire de trouver un arrangement qui permet, entre autres, de limiter le poids des capteurs par exemple pour un gain en carburant, le coût des capteurs, ainsi que les contraintes d'opérabilité et de maintenance d'un tel arrangement.

Afin de surveiller l'état de fonctionnement au cours du temps (« Health Monitoring » en Anglo-saxon) de la structure interne fixe et du moteur, il est connu d'utiliser un ensemble de capteurs spécifiques, tels que des capteurs de température, des capteurs de pression, des dispositifs de mesure de débit ou des capteurs de vibrations. Toutefois, l'exploitation des mesures issues de ces différents capteurs est complexe et peu précise.

En outre, un aéronef comportant un moteur fonctionnant à base de dihydrogène comporte une structure interne fixe ayant une fonction de réservoir de dihydrogène, ainsi que des canalisations qui relient le réservoir de dihydrogène au moteur, et qui subissent des températures cryogéniques et des pressions élevées.

Il est donc important de pouvoir rapidement détecter d'éventuelles fuites de dihydrogène au niveau du réservoir ou des canalisations, ainsi que de les localiser précisément. Pour cela, il est nécessaire d'employer de nombreux capteurs de température et de pression, ainsi que des dispositifs de mesure de débit.

Même si ces éléments donnent de bons résultats, il est nécessaire de trouver un arrangement qui permet, entre autres, de localiser et quantifier les fuites lors de l'utilisation de l'aéronef, de limiter le poids et le coût des capteurs, ainsi que les contraintes d'opérabilité et de maintenance d'un tel arrangement.

Le document US2017/096238 décrit un système propulsif comprenant une nacelle de forme tubulaire délimitée par des parois interne et externe, un turboréacteur situé à l'intérieur de la paroi intérieure de la nacelle, et une pluralité de capteurs d'incendie répartis dans le système propulsif et reliés à une unité de détection. Lorsqu'un capteur d'incendie détecte un incendie dans le système propulsif, ledit capteur d'incendie informe l'unité de détection, qui déclenche un moyen d'avertissement présent dans le cockpit.

### EXPOSÉ DE L'INVENTION

Un objet de la présente invention est de proposer un assemblage qui comporte deux tronçons tubulaires concentriques et une enveloppe d'un fluide et un ensemble de capteurs de flux thermique qui sont répartis entre les deux tronçons tubulaires.

À cet effet, est proposé un assemblage dans un aéronef comportant :
- un tronçon tubulaire extérieur centré sur une ligne centrale et délimitant un espace intérieur,
- un tronçon tubulaire intérieur monté de manière coaxiale par rapport au tronçon tubulaire extérieur et à l'intérieur du tronçon tubulaire extérieur, où le tronçon tubulaire intérieur renferme un fluide ayant une température dite « deuxième température »,
- une enveloppe d'un fluide montée de manière coaxiale par rapport au tronçon tubulaire extérieur et à l'intérieur du tronçon tubulaire intérieur, où l'enveloppe de fluide renferme un fluide ayant une température dite « première température » et où la première température est différente de la deuxième température,

caractérisé en ce que ledit assemblage comporte également :
   - une pluralité de groupes d'au moins quatre capteurs de flux thermique, où pour chaque groupe, les capteurs dudit groupe sont fixés sur la surface intérieure du tronçon tubulaire extérieur ou sur la surface extérieure du tronçon tubulaire intérieur ou sur la surface intérieure du tronçon tubulaire intérieur et globalement dans un même plan perpendiculaire à la ligne centrale, et où dans chaque groupe, les capteurs dudit groupe sont répartis angulairement autour de la ligne centrale, et
   - une unité de contrôle qui, pour chaque groupe, reçoit les données de chaque capteur dudit groupe, et qui, à partir de ces données, détermine un niveau d'alerte relatif audit assemblage,
l'unité de contrôle comportant :
   - des moyens de recueil qui sont destinés à recueillir pour chaque groupe de capteurs, la valeur relative au flux thermique qui traverse chaque capteur dudit groupe à un instant 't' et transmise par ledit capteur,
   - des premiers moyens de calcul qui sont destinés à calculer pour chaque groupe, une moyenne dite « de groupe » qui est la moyenne des valeurs ainsi recueillie pour ledit groupe,
   - des deuxièmes moyens de calcul qui sont destinés, pour chaque groupe et pour chaque capteur dudit groupe, à calculer la différence entre la valeur dudit capteur et la moyenne de groupe et le rapport entre cette différence et la moyenne de groupe, et
   - des moyens de classification qui sont destinés, pour chaque groupe et pour chaque capteur dudit groupe, à classer le niveau d'alerte dudit capteur dans une catégorie en fonction du rapport ainsi calculé pour ledit capteur.

Les groupes de capteurs forment ainsi un réseau de détection.

Avec un tel assemblage, le suivi des valeurs des différents capteurs de flux thermique permet de surveiller un éventuel problème au niveau de l'enveloppe du fluide, comme une fuite de fluide, un éventuel départ de feu ou une éventuelle surpression, avec un gain en masse par rapport à l'état de la technique. Cet assemblage permet également une amélioration de la détection d'un éventuel problème au niveau de l'enveloppe du fluide en termes de fiabilité, de temps de détection et de localisation dudit problème, ainsi qu'une diminution du temps d'investigation au sol afin de localiser ledit problème, et un meilleur suivi en cas d'apparition d'un problème.

Avantageusement, l'unité de contrôle comporte des moyens de détermination qui sont destinés à déterminer pour chaque groupe, la valeur maximale et la valeur minimale des valeurs recueillies pour le groupe, et les premiers moyens de calcul sont destinés à calculer la moyenne de groupe sur la base de l'ensemble des valeurs du groupe sans la valeur maximale et la valeur minimale.

Selon un mode de réalisation particulier, le tronçon tubulaire intérieur est réalisé en matériau thermiquement isolant avec une conductivité thermique inférieure à 0,2 Wm⁻¹K⁻¹.

Selon un mode de réalisation particulier, ledit assemblage est un turboréacteur d'aéronef, où l'enveloppe de fluide est un moteur canalisant un flux de gaz chaud, et où le tronçon tubulaire extérieur et 1e tronçon tubulaire intérieur constituent respectivement une paroi externe et une paroi interne d'une structure interne fixe.

Selon un mode de réalisation particulier, ledit assemblage est une canalisation, où l'enveloppe de fluide canalise un fluide pressurisé.

Selon un autre mode de réalisation particulier, ledit assemblage est un réservoir de stockage d'un fluide pressurisé, où l'enveloppe de fluide est configurée pour contenir un fluide pressurisé.

Le fluide pressurisé peut être un gaz ou un liquide, chaud ou froid.

L'invention propose également un aéronef comportant au moins un assemblage selon l'une des variantes précédentes.

### BRÈVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
[Fig. 1] est une vue de côté d'un aéronef selon l'invention,
[Fig. 2] est une représentation schématique et en coupe selon la ligne II-II de la Fig. 1 d'une structure interne fixe d'un turboréacteur selon un mode de réalisation de l'invention,
[Fig. 3] est une vue en coupe selon la ligne III-III de la structure interne fixe de la Fig. 2,
[Fig. 4a] est une vue de face d'un assemblage sous la forme d'une canalisation selon un autre mode de réalisation de l'invention,
[Fig. 4b] est une vue de face d'un assemblage sous la forme d'un réservoir selon un autre mode de réalisation de l'invention, et
[Fig. 5] représente un exemple d'architecture d'une unité de contrôle mise en œuvre dans un assemblage selon l'invention.

### EXPOSÉ DÉTAILLÉ DE MODES DE RÉALISATION

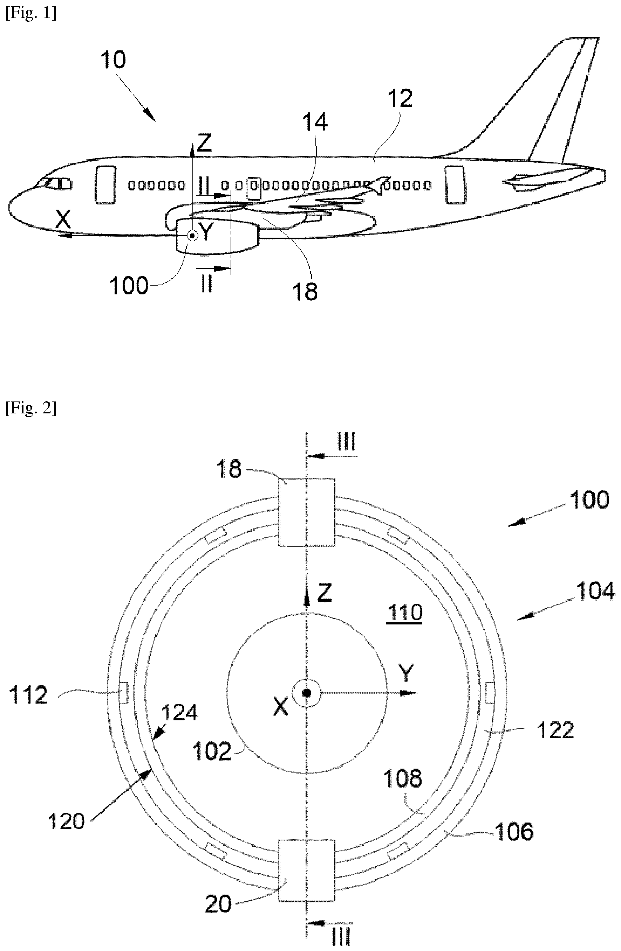

La Fig. 1 montre un aéronef 10 qui comporte un fuselage 12 de chaque côté duquel est fixée une aile 14 qui porte au moins un turboréacteur 100, en particulier un turboréacteur double flux, et un mât 18 qui assure la fixation du turboréacteur 100 sous l'aile 14.

Dans la description qui suit, et par convention, on appelle X l'axe longitudinal du turboréacteur 100 qui est parallèle à l'axe longitudinal de l'aéronef 10 et orienté positivement vers l'avant de l'aéronef 10, on appelle Y l'axe transversal qui est horizontal lorsque l'aéronef 10 est au sol, et Z l'axe vertical lorsque l'aéronef 10 est au sol, ces trois axes X, Y et Z étant orthogonaux entre eux.

La Fig. 2 montre un exemple de réalisation de l'invention dans le cas d'un turboréacteur 100 d'un aéronef 10. La Fig. 2 montre une vue en coupe de face du turboréacteur 100 qui comporte un moteur 102 formant un noyau autour duquel est agencée une structure interne fixe 104. Autour d'un carter du moteur 102 circule un flux d'air prélevé dans un flux secondaire du turboréacteur 100 pour refroidir le moteur 102 ou un flux d'air chaud prélevé dans le moteur 102 et l'ensemble formé par la structure interne fixe 104 et le moteur 102 se comporte alors comme une canalisation de transport pour le flux d'air. Le moteur 102 constitue une enveloppe de fluide 102 qui canalise un flux de gaz chaud.

La structure interne fixe 104 prend globalement la forme d'un cylindre de révolution coaxial avec l'axe longitudinal X.

Dans le mode de réalisation de l'invention présenté ici, la structure interne fixe 104 est divisée en deux demi-cylindres fixés en partie haute au mât 18 de l'aéronef 10. Les parties basses des deux demi-cylindres sont fixées à un élément structurel 20 du turboréacteur 100.

La structure interne fixe 104 comporte une paroi externe 106 et une paroi interne 108 coaxiale avec la paroi externe 106 et à l'intérieur de la paroi externe 106. Le moteur 102 est également monté de manière coaxiale avec la paroi interne 108 et à l'intérieur de celle-ci.

La paroi externe 106 est de préférence une paroi réalisée dans un matériau thermiquement isolant, mais peut également être une paroi structurelle de la structure interne fixe 104.

La paroi externe 106 et la paroi interne 108 constituent donc respectivement un tronçon tubulaire extérieur 106 et un tronçon tubulaire intérieur 108 montés de manière coaxiale l'un par rapport à l'autre et avec le tronçon tubulaire intérieur 108 à l'intérieur du tronçon tubulaire extérieur 106.

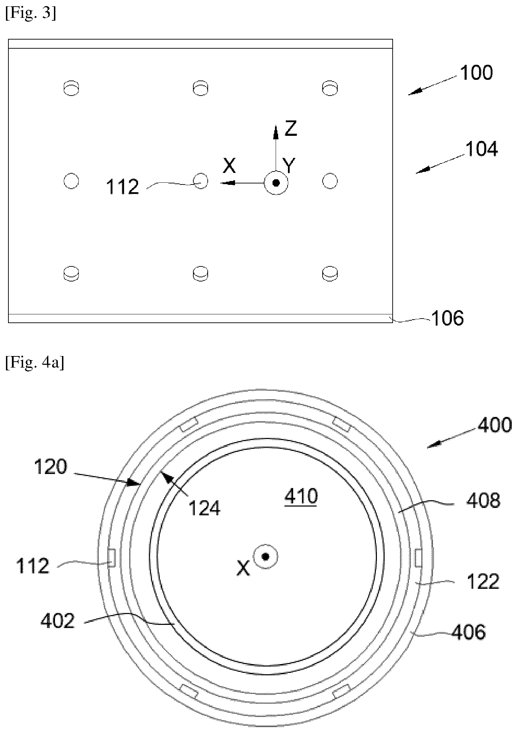

La Fig. 4a montre un autre exemple de réalisation de l'invention dans le cas d'une canalisation 400 pressurisée permettant par exemple de canaliser de l'air à haute température prélevé dans le moteur 102 ou un fluide froid tel que du dihydrogène et pouvant être mise en place dans l'aéronef 10 par exemple. Dans le mode de réalisation de l'invention présenté à la Fig. 4a, le fluide pressurisé est canalisé par une enveloppe de fluide 402 se présentant sous la forme d'une canalisation de transport 402 de la canalisation 400.

La canalisation 400 comporte également un tronçon tubulaire extérieur 406 et un tronçon tubulaire intérieur 408 montés de manière coaxiale l'un par rapport à l'autre et avec le tronçon tubulaire intérieur 408 à l'intérieur du tronçon tubulaire extérieur 406. L'enveloppe d'un fluide 402 est également montée de manière coaxiale avec le tronçon tubulaire extérieur 406 et avec le tronçon tubulaire intérieur 408 et à l'intérieur de celui-ci.

Le tronçon tubulaire intérieur 408 peut être une paroi réalisée dans un matériau thermiquement isolant.

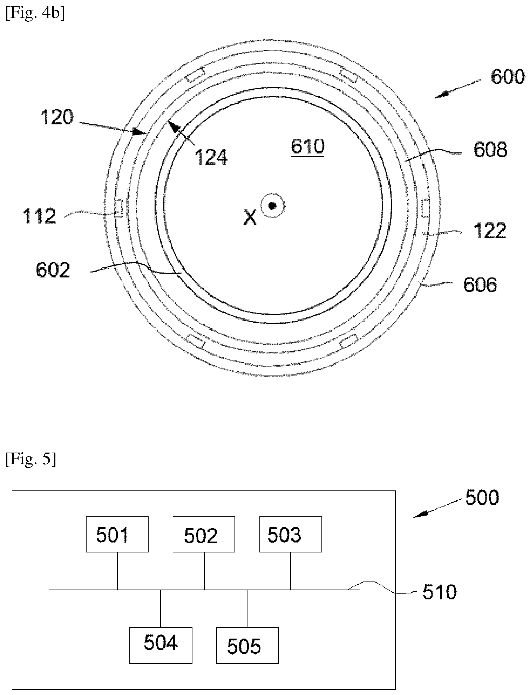

La Fig. 4b montre également un autre exemple de réalisation de l'invention dans le cas d'un réservoir 600 de stockage d'un fluide pressurisé à froid, et notamment à température cryogénique, tel que du dihydrogène et pouvant être mis en place dans l'aéronef 10 par exemple. Dans le mode de réalisation de l'invention présenté à la Fig. 4b, le fluide pressurisé est stocké dans le réservoir 600. Le réservoir 600 comporte au moins un tronçon tubulaire extérieur 606 et une enveloppe de fluide 602 montés de manière coaxiale l'un par rapport à l'autre et avec l'enveloppe de fluide 602 à l'intérieur du tronçon tubulaire extérieur 606.

Dans le cas d'un réservoir 600 de stockage de dihydrogène, l'enveloppe de fluide 602 et le tronçon tubulaire extérieur 606 forment les doubles parois structurales dudit réservoir 600. Le réservoir 600 comporte également un tronçon tubulaire intérieur 608 monté de manière coaxiale avec le tronçon tubulaire extérieur 606, et avec le tronçon tubulaire intérieur 608 à l'intérieur du tronçon tubulaire extérieur 606. L'enveloppe de fluide 602 est montée de manière coaxiale avec le tronçon tubulaire intérieur 608 et à l'intérieur de celui-ci.

Le tronçon tubulaire intérieur 608 peut être une paroi réalisée dans un matériau thermiquement isolant.

D'une manière générale, l'invention porte sur un assemblage100, 400, 600 comportant un tronçon tubulaire extérieur 106, 406, 606 et un tronçon tubulaire intérieur 108, 408, 608 montés de manière coaxiale l'un par rapport à l'autre et avec le tronçon tubulaire intérieur 108, 408, 608 à l'intérieur du tronçon tubulaire extérieur 106, 406, 606. Dans le mode de réalisation de l'invention présenté à la Fig. 2, l'assemblage 100 est le turboréacteur 100, dans le mode de réalisation de la Fig. 4a, l'assemblage 400 est la canalisation 400 et dans le mode de réalisation de la Fig. 4b, l'assemblage 600 est le réservoir 600.

Les différents tronçons tubulaires 106, 406, 606, 108, 408, 608 sont coaxiaux par rapport à une ligne centrale X. Dans le cas du turboréacteur 100 ou du réservoir 600, la ligne centrale se confond avec l'axe longitudinal X et dans le cas de la canalisation 400 qui peut présenter des courbures, la ligne centrale suit la courbe des centres des tronçons tubulaires.

L'assemblage 100, 400, 600 comporte également une enveloppe de fluide 102, 402, 602. Le fluide contenu dans l'enveloppe de fluide 102, 402, 602 est à une première température. Dans le cas de l'assemblage 100 et pour la canalisation 400, l'enveloppe de fluide 102, 402 est une canalisation de transport dans laquelle circule un fluide et montée de manière coaxiale par rapport au tronçon tubulaire intérieur 108, 408 et à l'intérieur de celui-ci. Dans le cas du réservoir 600 de stockage de dihydrogène à double parois, l'enveloppe de fluide 602 correspond à la paroi intérieure du réservoir 600 dans laquelle le dihydrogène est stocké, et montée de manière coaxiale par rapport au tronçon tubulaire extérieur 606, qui correspond à la paroi extérieure du réservoir 600.

Le tronçon tubulaire extérieur 106, 406, 606 délimite un espace intérieur 110, 410, 610 qui contient un autre fluide ayant une deuxième température différente de la première température du fluide contenu dans l'enveloppe de fluide 102, 402, 602, et l'assemblage 100, 400, 600 comporte des capteurs de flux thermique 112 (appelés ci-après « capteurs ») répartis dans cet espace intérieur 110, 410, 610 et fixés au tronçon tubulaire intérieur 108, 408, 608 ou au tronçon tubulaire extérieur 106, 406, 606, ce qui est le cas ici et plus précisément sur la surface intérieure du tronçon tubulaire extérieur 106, 406, 606. Ledit autre fluide est ainsi contenu dans le tronçon tubulaire intérieur 108, 408, 608 autour de l'enveloppe de fluide 102, 402, 602.

Les capteurs 112 sont de préférence fixés sur le tronçon tubulaire extérieur 106, 406, 606, qui est ici structurel, et par conséquent rigide, plutôt que sur le tronçon tubulaire intérieur 108, 408, 608 qui a une fonction d'isolation thermique et qui peut nécessiter d'être remplacé.

Les capteurs 112 peuvent être fixés sur la surface extérieure 120 du tronçon tubulaire intérieur 108, 408, 608, c'est-à-dire dans un espace 122 inclus dans l'espace intérieur 110, 410, 610 et délimité entre le tronçon tubulaire intérieur 108, 408, 608 et le tronçon tubulaire extérieur 106, 406, 606, ou sur la surface intérieure 124 du tronçon tubulaire intérieur 108, 408, 608. Chaque capteur 112 délivre une valeur relative à la valeur du flux thermique qui le traverse. Chaque capteur 112 peut être disposé à proximité d'une potentielle fuite d'air chaud issu d'un système d'alimentation en air chaud prélevé sur le moteur 102.

Selon une configuration, la première température du fluide contenu dans l'enveloppe de fluide 102, 402, 602 est supérieure à la deuxième température dudit autre fluide contenu dans l'espace intérieur 110, 410, 610 et donc entre l'enveloppe de fluide 102, 402, 602 et le tronçon tubulaire intérieur 108, 408, 608. En cas de fuite du fluide chaud de l'enveloppe de fluide 102, 402, 602 dans l'espace intérieur 110, 410, 610, le ou les capteurs 112 à proximité de ladite fuite vont permettre une détection de ladite fuite, puisque la valeur du flux thermique qui le ou les traverse sera différente de la valeur du flux thermique détecté avant l'apparition de ladite fuite.

Selon une autre configuration, chaque capteur 112 peut être disposé à proximité d'une potentielle fuite de fluide froid issu de l'enveloppe de fluide 402, 602. Selon cette configuration, la première température du fluide contenu dans l'enveloppe de fluide 402, 602 est inférieure à la deuxième température de l'espace intérieur 410, 610. En cas de fuite du fluide froid de l'enveloppe de fluide 402, 602 dans l'espace intérieur 410, 610, le ou les capteurs 112 à proximité de ladite fuite vont permettre une détection de ladite fuite, puisque la valeur du flux thermique qui le ou les traverse sera différente de la valeur du flux thermique détecté avant l'apparition de ladite fuite.

La Fig. 3 montre la répartition des capteurs 112 le long de la ligne centrale X dans le cas du turboréacteur 100 de la Fig. 2, mais cela s'applique de la même manière au cas de la canalisation 400 de la Fig. 4a ou du réservoir de la Fig. 4b. Pour permettre de voir les capteurs 112, seul le tronçon tubulaire extérieur 106 a été représenté.

Il y a plusieurs groupes de capteurs 112 qui sont distribués le long de la ligne centrale X. Ainsi, pour chaque groupe, il y a au moins quatre capteurs 112 dans le groupe et les capteurs 112 dudit groupe sont disposés globalement dans un même plan perpendiculaire à la ligne centrale X. La répartition des capteurs 112 le long de la ligne centrale X permet de couvrir la partie de l'assemblage 100, 400, 600 concernée par la surveillance.

Autour de la ligne centrale X, les capteurs 112 du groupe sont répartis angulairement autour de la ligne centrale X et selon le nombre de capteurs 112 mis en œuvre, l'écart entre deux capteurs 112 consécutifs angulairement varie. Préférentiellement il y a au moins quatre capteurs 112 par groupe qui seront alors par exemple à 90° l'un de l'autre autour de la ligne centrale X. Dans les modes de réalisation de l'invention présentés à la Fig. 2, à la Fig. 4a et à la Fig. 4b, il y a six capteurs 112 par groupe et ces capteurs 112 sont espacés de 60° les uns des autres, mais bien sûr une répartition angulaire différente est possible.

L'installation particulière des capteurs 112 permet d'avoir des tranches équipées de capteurs 112 et réparties le long de la ligne centrale X et de couvrir l'assemblage 100, 400, 600 sur toute la longueur ainsi équipée. Chaque tranche correspond ainsi à un groupe.

L'assemblage 100, 400, 600 comporte également une unité de contrôle qui est en liaison filaire ou non filaire avec chaque capteur 112 de chaque groupe afin de recueillir la valeur délivrée par ledit capteur 112 à un instant 't'. Une liaison non filaire entre les capteurs 112 et l'unité de contrôle permet de faciliter le déplacement des capteurs 112, ainsi que l'ajout ou le remplacement de ces derniers.

En fonction des flux thermiques reçus par les différents capteurs 112 le long de l'assemblage 100, 400, 600, l'unité de contrôle peut déterminer si un ou plusieurs capteurs 112 d'un groupe mesurent des flux thermiques disproportionnés par rapport aux autres capteurs du même groupe, ce qui peut signifier l'apparition d'un problème au niveau de l'enveloppe de fluide 102, 402, 602.

À partir des valeurs reçues, l'unité de contrôle détermine un niveau d'alerte relatif à l'assemblage 100, 400, 600. Les niveaux d'alerte sont par exemple au nombre de quatre :
- classe 1 : les conditions sont normales,
- classe 2 : les conditions sont légèrement anormales ce qui suggère une fuite latente de l'enveloppe de fluide 102, 402, 602 proche du/des capteurs 112 présentant une valeur disproportionnée par rapport aux autres,
- classe 3 : les conditions sont fortement anormales ce qui suggère une explosion due à une surpression proche du/des capteurs 112 présentant une valeur disproportionnée par rapport aux autres, et
- classe 4 : les conditions sont très fortement anormales ce qui suggère la présence d'un début d'incendie proche du/des capteurs 112 présentant une valeur disproportionnée par rapport aux autres.

En fonction du niveau d'alerte, des mesures de corrections appropriées peuvent être prises, comme par exemple des mesures en vol, des mesures de maintenance pour les conditions légèrement anormales et fortement anormales, et des mesures de vérification et éventuellement d'extinction pour les conditions très fortement anormales, comme par exemple la détection d'un début d'incendie proche du carter du moteur 102.

Ainsi, l'assemblage 100, 400, 600 permet une surveillance en continu des conditions de fonctionnement avec des capteurs peu onéreux, simples à mettre en œuvre et légers en comparaison des éléments de l'état de la technique.

De plus, l'assemblage 100, 400, 600 permet une vérification et une corrélation des modèles thermiques de simulation utilisés lors de tests de l'assemblage 100, 400, 600 en fonctionnement au sol ou en vol, et en phase de développement.

Selon un mode de réalisation particulier, le tronçon tubulaire intérieur 108, 408, 608 est réalisé dans un matériau thermiquement isolant. Le matériau thermiquement isolant a une conductivité thermique inférieure à 0,2 Wm⁻¹K⁻¹, et notamment de l'ordre de 0,04 Wm⁻¹K⁻¹. Ceci permet de protéger les capteurs 112 de potentiels jets d'air chaud directs, pouvant être à une température jusqu'à environ 650°C. Ce tronçon tubulaire intérieur permet ainsi d'améliorer la durée de vie des capteurs 112, notamment en cas d'éclatement d'un tuyau ou d'un départ d'incendie. Ceci permet également de protéger thermiquement l'enveloppe de fluide 102, 402, 602, et de réduire d'éventuelles fuites thermiques dommageables de l'enveloppe de fluide 102, 402, 602 vers son environnement externe.

Selon un mode de réalisation particulier, l'assemblage 100, 400, 600 comporte une pluralité de tronçons tubulaires intérieurs 108, 408, 608, les tronçons tubulaires intérieurs 108, 408, 608 étant disposés de manière à recouvrir les capteurs 112 lorsque le tronçon tubulaire extérieur 106, 406, 606 nécessite d'être protégé thermiquement de l'environnement thermique du moteur 102. Par exemple, pour une structure interne fixe, il peut être nécessaire de protéger thermiquement ladite structure interne fixe 104 de l'environnement thermique chaud du moteur 102. Dans ce cas, le tronçon tubulaire intérieur 108, 408, 608 réalisé en matériau thermiquement isolant a une fonction de protection thermique du tronçon tubulaire extérieur 106, 406, 606 et une fonction de protection thermique des capteurs 112. De plus, les flux thermiques circonférentiels parasites dans le tronçon tubulaire intérieur 108, 408, 608 réalisé en matériau thermiquement isolant sont faibles, ce qui augmente la précision des mesures acquises par les capteurs 112 ainsi que la précision de la localisation d'un flux de fluide anormal impactant le tronçon tubulaire intérieur 108, 408, 608.

La Fig. 5 montre un exemple d'une unité de contrôle 500 qui comporte, reliés par un bus de communication 510: un processeur 501 ou CPU (« Central Processing Unit » en anglais) ; une mémoire vive RAM 502 (« Random Access Memory » en anglais) ; une mémoire morte ROM 503 (« Read Only Memory » en anglais) ; une unité de stockage telle qu'un disque dur ou un lecteur de support de stockage, tel qu'un lecteur de cartes SD 504 (« Secure Digital » en anglais) ; au moins une interface de communication 505, permettant à l'unité de contrôle de communiquer avec les capteurs 112.

Le processeur est capable d'exécuter des instructions chargées dans la RAM à partir de la ROM, d'une mémoire externe (non représentée), d'un support de stockage (tel qu'une carte SD), ou d'un réseau de communication. Lorsque l'équipement est mis sous tension, le processeur est capable de lire de la RAM des instructions et de les exécuter. Ces instructions forment un programme d'ordinateur causant la mise en œuvre, par le processeur, de tout ou partie des algorithmes et étapes décrits ci-dessous.

Tout ou partie des algorithmes et étapes décrits ci-après peut être implémenté sous forme logicielle par exécution d'un ensemble d'instructions par une machine programmable, par exemple un DSP (« Digital Signal Processor » en anglais) ou un microcontrôleur, ou être implémenté sous forme matérielle par une machine ou un composant dédié, par exemple un FPGA (« Field-Programmable Gate Array » en anglais) ou un ASIC (« Application-Specific Integrated Circuit » en anglais).

Un exemple de méthode de détermination du niveau d'alerte consiste pour l'unité de contrôle à un instant 't', à :
- recueillir pour chaque groupe de capteurs 112, la valeur relative au flux thermique qui traverse chaque capteur 112 dudit groupe à l'instant 't' et transmise par ledit capteur 112,
- calculer pour chaque groupe, une moyenne dite « de groupe » qui est la moyenne des valeurs ainsi recueillie pour ledit groupe,
- pour chaque groupe et pour chaque capteur 112 dudit groupe, calculer la différence entre la valeur dudit capteur 112 et la moyenne de groupe et le rapport entre cette différence et la moyenne de groupe,
- pour chaque groupe et pour chaque capteur 112 dudit groupe, classer le niveau d'alerte dudit capteur 112 dans une catégorie en fonction du rapport ainsi calculé pour ledit capteur 112. Par exemple, pour donner des ordres de grandeur qui peuvent être adaptés en fonction de la calibration des modèles thermiques de simulation pendant des essais de développement, si le rapport est inférieur ou égal à 30%, le capteur 112 correspondant est classé en classe 1, si le rapport est inclus dans l'intervalle ]30%, 80%], le capteur 112 correspondant est classé en classe 2, si le rapport est inclus dans l'intervalle ]80%, 150%], le capteur 112 correspondant est classé en classe 3, si le rapport est strictement supérieur à 150%, le capteur 112 correspondant est classé en classe 4. Typiquement, ce classement peut être réalisé après plusieurs acquisitions temporelles successives, afin d'augmenter la fiabilité des calculs. Par exemple, ce classement peut être réalisé après trois acquisitions successives, en fonction de la fréquence d'acquisition des capteurs 112.

À partir de ce classement, l'unité de contrôle informe la personne responsable, par exemple le pilote dans le cas de l'aéronef 10 qui peut alors prendre les mesures de corrections appropriées. L'information de la personne responsable peut prendre différentes formes, comme par exemple l'affichage d'un message sur un écran, l'envoi d'un message sur un ordinateur, une tablette ou un téléphone, etc. L'unité de contrôle peut ainsi comprendre des moyens d'affichage, disposés dans le cockpit de l'aéronef, ou à l'extérieur de l'aéronef. L'unité de contrôle 500 comporte ainsi :
- des moyens de recueil qui sont destinés à recueillir pour chaque groupe de capteurs 112, la valeur relative au flux thermique qui traverse chaque capteur 112 dudit groupe à l'instant 't' et transmise par ledit capteur 112,
- des premiers moyens de calcul qui sont destinés à calculer pour chaque groupe, une moyenne dite « de groupe » qui est la moyenne des valeurs ainsi recueillie pour ledit groupe,
- des deuxièmes moyens de calcul qui sont destinés, pour chaque groupe et pour chaque capteur 112 dudit groupe, à calculer la différence entre la valeur dudit capteur 112 et la moyenne de groupe et le rapport entre cette différence et la moyenne de groupe, et
- des moyens de classification qui sont destinés, pour chaque groupe et pour chaque capteur 112 dudit groupe, à classer le niveau d'alerte dudit capteur 112 dans une catégorie en fonction du rapport ainsi calculé pour ledit capteur 112.

L'unité de contrôle 500 comporte également des moyens de transmission destinés à transmettre l'information nécessaire à la personne responsable.

L'unité de contrôle 500 est ainsi configurée pour analyser les données acquises par les capteurs 112 en temps réel, mais peut également être configurée pour stocker ces données et pour permettre ensuite une analyse de ces données stockées.

Pour éviter que la dérive ou la panne d'un capteur 112 engendre des niveaux d'alerte erronés ou une absence de détection d'une alerte réelle, la méthode de détermination est appliquée en retirant les valeurs minimale et maximale recueillies pour chaque groupe pour le calcul de la moyenne des valeurs recueillies pour ledit groupe. La valeur minimale est considérée comme étant représentative d'une dérive ou d'une panne d'un capteur 112, tandis que la valeur maximale est considérée comme étant représentative d'une surchauffe anormale réelle. Ainsi, entre le recueil des valeurs et le calcul de la moyenne de groupe, la méthode de détermination consiste à déterminer, pour chaque groupe, la valeur maximale et la valeur minimale des valeurs ainsi recueillies pour le groupe et le calcul de la moyenne de groupe s'effectue alors sur la base de l'ensemble des valeurs du groupe sans la valeur maximale et la valeur minimale ainsi déterminées.

Dans ce mode de réalisation, dans la mesure où une valeur maximale et une valeur minimale sont retirées pour le calcul de la moyenne de valeurs, le nombre de capteurs 112 par groupe est au moins égal à quatre.

L'unité de contrôle 500 comporte alors des moyens de détermination qui sont destinés à déterminer pour chaque groupe, la valeur maximale et la valeur minimale des valeurs ainsi recueillies pour le groupe.

Les premiers moyens de calcul sont alors destinés à calculer la moyenne de groupe sur la base de l'ensemble des valeurs du groupe sans la valeur maximale et la valeur minimale ainsi déterminées.

Pour confirmer la véracité d'un niveau d'alerte, la méthode de détermination est effectuée plusieurs fois à suivre, afin de confirmer qu'un niveau d'alerte reste stable dans le temps. Selon un mode de réalisation particulier, la méthode de détermination est effectuée trois fois successivement, par exemple à une fréquence de 1 Hz.

## Revendications

1. Assemblage (100, 400, 600) dans un aéronef (10) comportant :
- un tronçon tubulaire extérieur (106, 406, 606) centré sur une ligne centrale (X) et délimitant un espace intérieur (110, 410, 610),
- un tronçon tubulaire intérieur (108, 408, 608) monté de manière coaxiale par rapport au tronçon tubulaire extérieur (106, 406, 606) et à l'intérieur du tronçon tubulaire extérieur (106, 406, 606), où le tronçon tubulaire intérieur (108, 408, 608) renferme un fluide ayant une température dite « deuxième température »,
- une enveloppe d'un fluide (102, 402, 602) montée de manière coaxiale par rapport au tronçon tubulaire extérieur (106, 406, 606) et à l'intérieur du tronçon tubulaire intérieur (108, 408, 608), où l'enveloppe de fluide (102, 402, 602) renferme un fluide ayant une température dite « première température » et où la première température est différente de la deuxième température,
**caractérisé en ce que** ledit assemblage (100, 400, 600) comporte également :
- une pluralité de groupes d'au moins quatre capteurs de flux thermique (112), où pour chaque groupe, les capteurs (112) dudit groupe sont fixés sur la surface intérieure du tronçon tubulaire extérieur (106, 406, 606) ou sur la surface extérieure (120) du tronçon tubulaire intérieur (108, 408, 608) ou sur la surface intérieure (124) du tronçon tubulaire intérieur (108, 408, 608) et globalement dans un même plan perpendiculaire à la ligne centrale (X), et où dans chaque groupe, les capteurs (112) dudit groupe sont répartis angulairement autour de la ligne centrale (X), et
- une unité de contrôle qui, pour chaque groupe, reçoit les données de chaque capteur (112) dudit groupe, et qui, à partir de ces données, détermine un niveau d'alerte relatif audit assemblage (100, 400, 600), l'unité de contrôle (500) comportant :
- des moyens de recueil qui sont destinés à recueillir pour chaque groupe de capteurs (112), la valeur relative au flux thermique qui traverse chaque capteur (112) dudit groupe à un instant 't' et transmise par ledit capteur (112),
- des premiers moyens de calcul qui sont destinés à calculer pour chaque groupe, une moyenne dite « de groupe » qui est la moyenne des valeurs ainsi recueillie pour ledit groupe,
- des deuxièmes moyens de calcul qui sont destinés, pour chaque groupe et pour chaque capteur (112) dudit groupe, à calculer la différence entre la valeur dudit capteur (112) et la moyenne de groupe et le rapport entre cette différence et la moyenne de groupe, et
- des moyens de classification qui sont destinés, pour chaque groupe et pour chaque capteur (112) dudit groupe, à classer le niveau d'alerte dudit capteur (112) dans une catégorie en fonction du rapport ainsi calculé pour ledit capteur (112).

2. Assemblage (100, 400, 600) selon la revendication 1, **caractérisé en ce que** l'unité de contrôle (500) comporte des moyens de détermination qui sont destinés à déterminer pour chaque groupe, la valeur maximale et la valeur minimale des valeurs recueillies pour le groupe, et **en ce que** les premiers moyens de calcul sont destinés à calculer la moyenne de groupe sur la base de l'ensemble des valeurs du groupe sans la valeur maximale et la valeur minimale.

3. Assemblage (100, 400, 600) selon l'une des revendications 1 ou 2, **caractérisé en ce que** le tronçon tubulaire intérieur (108, 408, 608) est réalisé en matériau thermiquement isolant avec une conductivité thermique inférieure à 0,2 Wm⁻¹K⁻¹.

4. Assemblage (100) selon l'une des revendications 1 à 3, **caractérisé en ce que** ledit assemblage (100) est un turboréacteur d'aéronef (10), où l'enveloppe de fluide (102) est un moteur canalisant un flux de gaz chaud, et où le tronçon tubulaire extérieur (106) et le tronçon tubulaire intérieur (108) constituent respectivement une paroi externe (106) et une paroi interne (108) d'une structure interne fixe (104).

5. Assemblage (400) selon l'une des revendications 1 à 3, **caractérisé en ce que** ledit assemblage (400) est une canalisation, où l'enveloppe de fluide (402) canalise un fluide pressurisé.

6. Assemblage (600) selon l'une des revendications 1 à 3, **caractérisé en ce que** ledit assemblage (600) est un réservoir de stockage d'un fluide pressurisé, où l'enveloppe de fluide (602) est configurée pour contenir un fluide pressurisé.

7. Aéronef (10) comportant au moins un assemblage (100, 400, 600) selon l'une des revendications 4 à 6.

## Patentansprüche

1. Anordnung (100, 400, 600) in einem Flugzeug (10), umfassend:
- einen äußeren rohrförmigen Abschnitt (106, 406, 606), der auf eine zentrale Linie (X) zentriert ist und einen Innenraum (110, 410, 610) begrenzt,
- einen inneren rohrförmigen Abschnitt (108, 408, 608), der koaxial zu dem äußeren rohrförmigen Abschnitt (106, 406, 606) und innerhalb des äußeren rohrförmigen Abschnitts (106, 406, 606) montiert ist, wobei der innere rohrförmige Abschnitt (108, 408, 608) ein Fluid umschließt, das eine als "zweite Temperatur" bezeichnete Temperatur hat,
- einen Mantel eines Fluids (102, 402, 602), der koaxial zu dem äußeren rohrförmigen Abschnitt (106, 406, 606) und innerhalb des inneren rohrförmigen Abschnitts (108, 408, 608) montiert ist, wobei der Fluidmantel (102, 402, 602) ein Fluid umschließt, das eine als "erste Temperatur" bezeichnete Temperatur hat, wobei die erste Temperatur verschieden von der zweiten Temperatur ist, **dadurch gekennzeichnet, dass** die Anordnung (100, 400, 600) ferner umfasst:
- eine Mehrzahl von Gruppen von mindestens vier Wärmeflusssensoren (112), wobei bei jeder Gruppe die Sensoren (112) der Gruppe auf der Innenfläche des äußeren rohrförmigen Abschnitts (106, 406, 606) oder auf der Außenfläche (120) des inneren rohrförmigen Abschnitts (108, 408, 608) oder auf der Innenfläche (124) des inneren rohrförmigen Abschnitts (108, 408, 608) und insgesamt in einer selben zu der zentralen Linie (X) senkrechten Ebene befestigt sind und wobei in jeder Gruppe die Sensoren (112) der Gruppe winklig um die zentrale Linie (X) herum verteilt sind, und
- eine Steuereinheit, die für jede Gruppe die Daten jedes Sensors (112) der Gruppe empfängt und die anhand dieser Daten eine Warnstufe bezüglich der Anordnung (100, 400, 600) ermittelt, wobei die Steuereinheit (500) umfasst:
- Erfassungsmittel, die dazu bestimmt sind, für jede Gruppe von Sensoren (112) den Wert bezüglich des Wärmeflusses zu erfassen, der jeden Sensor (112) der Gruppe zu einem Zeitpunkt 't' durchquert und von dem Sensor (112) übertragen wird,
- erste Rechenmittel, die dazu bestimmt sind, für jede Gruppe einen als "Gruppenmittelwert" bezeichneten Mittelwert zu berechnen, welcher der Mittelwert der für die Gruppe so erfassten Werte ist,
- zweite Rechenmittel, die dazu bestimmt sind, für jede Gruppe und für jeden Sensor (112) der Gruppe die Differenz zwischen dem Wert des Sensors (112) und dem Gruppenmittelwert und das Verhältnis zwischen dieser Differenz und dem Gruppenmittelwert zu berechnen, und
- Klassifikationsmittel, die dazu bestimmt sind, für jede Gruppe und für jeden Sensor (112) der Gruppe die Warnstufe des Sensors (112) in Abhängigkeit von dem so für den Sensor (112) berechneten Verhältnis in eine Kategorie einzustufen.

2. Anordnung (100, 400, 600) nach Anspruch 1, **dadurch gekennzeichnet, dass** die Steuereinheit 500) Ermittlungsmittel umfasst, die dazu bestimmt sind, für jede Gruppe den größten Wert und den kleinsten Wert der für die Gruppe erfassten Werte zu ermitteln, und dadurch, dass die ersten Rechenmittel dazu bestimmt sind, den Gruppenmittelwert auf der Grundlage der Gesamtheit der Werte der Gruppe ohne den größten Wert und den kleinsten Wert zu berechnen.

3. Anordnung (100, 400, 600) nach einem der Ansprüche 1 oder 2, **dadurch gekennzeichnet, dass** der innere rohrförmige Abschnitt (108, 408, 608) aus thermisch isolierendem Material mit einer Wärmeleitfähigkeit von weniger als 0,2 Wm⁻¹K⁻¹ ausgeführt ist.

4. Anordnung (100) nach einem der Ansprüche 1 bis 3, **dadurch gekennzeichnet, dass** die Anordnung (100) ein Turbostrahltriebwerk eines Flugzeugs (10) ist, wobei der Fluidmantel (102) ein Motor ist, der einen heißen Gasstrom kanalisiert, und wobei der äußere rohrförmige Abschnitt (106) und der innere rohrförmige Abschnitt (108) eine Außenwand (106) beziehungsweise eine Innenwand (108) einer feststehenden inneren Struktur (104) bilden.

5. Anordnung (400) nach einem der Ansprüche 1 bis 3, **dadurch gekennzeichnet, dass** die Anordnung (400) eine Leitung ist, wobei der Fluidmantel (402) ein unter Druck stehendes Fluid kanalisiert.

6. Anordnung (600) nach einem der Ansprüche 1 bis 3, **dadurch gekennzeichnet, dass** die Anordnung (600) ein Tank zum Speichern eines unter Druck stehenden Fluids ist, wobei der Fluidmantel (602) dazu ausgestaltet ist, ein unter Druck stehendes Fluid zu enthalten.

7. Flugzeug (10), das mindestens eine Anordnung (100, 400, 600) nach einem der Ansprüche 4 bis 6 umfasst.

## Claims

1. Assembly (100, 400, 600) in an aircraft (10), comprising:
- an outer tubular portion (106, 406, 606) that is centred on a central line (X) and delimits an inner space (110, 410, 610),
- an inner tubular portion (108, 408, 608) that is mounted coaxially with the outer tubular portion (106, 406, 606) and inside the outer tubular portion (106, 406, 606), wherein the inner tubular portion (108, 408, 608) contains a fluid exhibiting a temperature referred to as "second temperature",
- a fluid jacket (102, 402, 602) that is mounted coaxially with the outer tubular portion (106, 406, 606) and inside the inner tubular portion (108, 408, 608), wherein the fluid jacket (102, 402, 602) contains a fluid exhibiting a temperature referred to as "first temperature" and wherein the first temperature is different from the second temperature,
**characterized in that** said assembly (100, 400, 600) also comprises:
- a plurality of groups of at least four thermal flow sensors (112), wherein, for each group, the sensors (112) of said group are fixed on the inner surface of the outer tubular portion (106, 406, 606) or on the outer surface (120) of the inner tubular portion (108, 408, 608) or on the inner surface (124) of the inner tubular portion (108, 408, 608) and overall in one and the same plane perpendicular to the central line (X), and wherein, in each group, the sensors (112) of said group are distributed angularly about the central line (X), and
- a control unit which, for each group, receives the data from each sensor (112) of said group and which, on the basis of these data, determines a warning level that relates to said assembly (100, 400, 600), the control unit (500) having:
- collecting means which are intended to collect, for each group of sensors (112), the value that relates to the thermal flow passing through each sensor (112) of said group at a time 't' and is transmitted by said sensor (112),
- first calculation means which are intended to calculate, for each group, a so-called "group" average, which is the average of the values thus collected for said group,
- second calculation means which are intended, for each group and for each sensor (112) of said group, to calculate the difference between the value of said sensor (112) and the group average and the ratio between this difference and the group average, and
- classification means which are intended, for each group and for each sensor (112) of said group, to classify the warning level of said sensor (112) into a category depending on the ratio thus calculated for said sensor (112).

2. Assembly (100, 400, 600) according to Claim 1, **characterized in that** the control unit (500) has determination means which are intended to determine, for each group, the maximum value and the minimum value of the values collected for the group, and **in that** the first calculation means are intended to calculate the group average on the basis of the set of values of the group without the maximum value and the minimum value.

3. Assembly (100, 400, 600) according to one of Claims 1 or 2, **characterized in that** the inner tubular portion (108, 408, 608) is made of a thermally insulating material with a thermal conductivity of less than 0.2 Wm⁻¹K⁻¹.

4. Assembly (100) according to one of Claims 1 to 3, **characterized in that** said assembly (100) is a jet engine of an aircraft (10), wherein the fluid jacket (102) is an engine channelling a flow of hot gas, and wherein the outer tubular portion (106) and the inner tubular portion (108) respectively constitute an external wall (106) and an internal wall (108) of an internal fixed structure (104).

5. Assembly (400) according to one of Claims 1 to 3, **characterized in that** said assembly (400) is a pipe, wherein the fluid jacket (402) channels a pressurized fluid.

6. Assembly (600) according to one of Claims 1 to 3, **characterized in that** said assembly (600) is a storage tank for a pressurized fluid, wherein the fluid jacket (602) is configured to contain a pressurized fluid.

7. Aircraft (10) comprising at least one assembly (100, 400, 600) according to one of Claims 4 to 6.
